# EUROPÄISCHE PATENTSCHRIFT

(11) **EP 2 155 500 B1**
(45) Veröffentlichungstag und Bekanntmachung des Hinweises auf die Patenterteilung: **27.01.2016**
(21) Anmeldenummer: 08749332.6
(22) Anmeldetag: 06.05.2008
(51) Int. Cl.: B42D 15/00, G02B 5/30

(54) **VERFAHREN ZUR HERSTELLUNG EINER VERNETZTEN FLÜSSIGKRISTALLSCHICHT SOWIE VORRICHTUNG ZUR DURCHFÜHRUNG DES VERFAHRENS**
METHOD FOR THE PRODUCTION OF A CROSSLINKED LIQUID CRYSTAL LAYER, AND APPARATUS FOR CARRYING OUT SAID METHOD
PROCÉDÉ DE PRODUCTION D'UNE COUCHE DE CRISTAUX LIQUIDES RÉTICULÉS ET DISPOSITIF POUR LA MISE EN OEUVRE DE CE PROCÉDÉ

(30) Priorität: 10.05.2007 DE 102007022437
(43) Veröffentlichungstag der Anmeldung: 24.02.2010
(73) Patentinhaber: Leonhard Kurz Stiftung & Co. KG, 90763 Fürth (DE)
(72) Erfinder: KATSCHOREK, Haymo, 90578 Obermichelbach (DE); BREHM, Ludwig, 91325 Adelsdorf (DE)
(74) Vertreter: Zinsinger, Norbert
(86) Internationale Anmeldenummer: PCT/EP2008/003605
(87) Internationale Veröffentlichungsnummer: WO 2008/138512

(56) Entgegenhaltungen:
- EP-A- 0 435 029
- EP-A- 1 088 846
- EP-A- 1 189 079
- EP-A- 1 227 347
- DE-A1-102006 027 236
- JP-A- 2003 145 912
- US-A1- 2006 108 063

## Beschreibung

Die Erfindung betrifft ein Verfahren zur Herstellung einer vernetzten, polymeren Flüssigkristallschicht enthaltend orientierte Flüssigkristalle, die einen blickwinkelabhängigen Farbwechseleffekt aufweisen, sowie eine Vorrichtung zur Durchführung des Verfahrens.

Als Flüssigkristalle werden organische Moleküle bezeichnet, die üblicherweise langgestreckt sind und einen Dipol-Charakter aufweisen. Dadurch können Flüssigkristalle in einer flüssigen und in einer festen Phase vorliegen, weiterhin aber noch in einem weiteren Aggregatzustand, nämlich in der flüssigkristallinen Phase oder Mesophase. Makroskopisch gesehen handelt es sich bei der flüssigkristallinen Phase um eine Flüssigkeit. Mikroskopisch gesehen, d.h. auf die Anordnung der einzelnen Moleküle zueinander bezogen, zeigt die flüssigkristalline Phase die physikalischen Eigenschaften eines Festkörpers mit anisotropem, also richtungsabhängigem Verhalten.

Im Bereich von Sicherheitselementen zum Schutz von Sicherheitsdokumenten, wie Ausweisen, Banknoten, Bankkarten, Urkunden usw., werden vernetzte polymere Flüssigkristallschichten aus orientierten Flüssigkristallen aufgrund ihrer interessanten optischen Effekte bereits seit längerem verwendet. So werden häufig polymere Flüssigkristallschichten eingesetzt, die bereichsweise aufgrund von Doppelbrechung farbig transparent sind und einen Farbeffekt zeigen, der abhängig vom Blickwinkel des Betrachters seine Farbe wechselt. Um die gewünschten optischen Eigenschaften bei.fiüssigkristallinen Materialien zu erzielen, werden Flüssigkristallschichten bisher auf Oberflächen gebildet die chemisch oder physikalisch vorbehandelt und dadurch gezielt strukturiert sind, um mit der Strukturierung eine Orientierung der Flüssigkristalle zu erzeugen.

EP 1 227 347 A1 beschreibt ein Herstellungsverfahren für ein individualisiertes optisch variables Element mit polarisierenden Eigenschaften, das zur Sicherung von Dokumenten verwendet wird. Bei diesem Verfahren wird auf ein Substrat mittels eines Tintenstrahldruckers eine Photopolymerschicht aufgedruckt, welche sich nachfolgend durch Bestrahlung mit polarisiertem Licht in bestimmter Weise orientieren lässt. Auf die derart gebildete Orientierungsschicht wird anschließend eine Schicht aus einem Flüssigkristall-Material mittels eines Tintenstrahldruckers aufgebracht und Bedingungen geschaffen, unter denen sich die enthaltenen Flüssigkristalle an der Orientierungsschicht ausrichten. Abschließend wird die Flüssigkristallschicht mit UV-Licht gehärtet und die Ausrichtung der Flüssigkristalle fixiert.

Die Orientierungsschicht, welche die Orientierung der Flüssigkristalle vorgibt bzw. bestimmt, ist gemäß EP 1 227 347 A1 eine vernetzte Polymerschicht. Auch andere vernetzte Kunststoffmaterialien, die für Flüssigkristalle orientierend wirkende Oberflächen aufweisen, werden bereits als Trägersubstrate verwendet, wie Trägersubstrate mit strukturierten Oberflächen, gebürsteten oder geriebenen Oberflächen, aktivierten Oberflächen usw.. Die hauptsächliche Verwendung von vernetzten Kunststoffen als Trägersubstratmaterial ist dadurch bedingt, dass Flüssigkristalle meist in Lösung auf die Orientierungsschicht bzw. die orientierende Oberfläche des Trägersubstrats aufgebracht werden und die in der Lösung enthaltenen Lösungsmittel eine Orientierungsschicht bzw. Oberfläche aus nicht vernetztem Kunststoff, wie beispielsweise aus thermoplastischem Kunststoff, anlösen oder aufquellen können. Durch das Anlösen oder Aufquellen geht allerdings die Orientierungswirkung der Orientierungsschicht bzw. Oberfläche verloren oder zumindest weitgehend verloren, da die gebildete Strukturierung beeinträchtigt wird oder verloren geht und es zur Durchmischung des Flüssigkristallmaterials mit dem Kunststoff kommen kann. Somit ist die Materialauswahl zur Ausbildung einer polymeren Orientierungsschicht bzw. einer die Flüssigkristalle orientierenden polymeren Oberfläche im Regelfall auf Materialien begrenzt, die nicht durch das aufgetragene Flüssigkristallmaterial angelöst oder aufgequollen werden. DE-A-0 435 029 zeigt einen Herstellungsverfahren gemäß den Oberbegriff der Ansprüchen 1 und 2.

Der Erfindung liegt nun die Aufgabe zugrunde, die Herstellung einer vernetzten polymeren Flüssigkristallschicht enthaltend orientierte Flüssigkristalle zu vereinfachen und eine Vorrichtung zur Durchführung des Verfahrens anzugeben.

Die Aufgabe wird von den Verfahren gemäß Ansprüchen 1 und 2 gelöst.

Die Orientierung der Flüssigkristalle wird erfindungsgemäß im Wesentlichen dadurch erzeugt, dass die Bereiche der Schichtlage, in denen eine Orientierung der Flüssigkristalle erfolgen soll, mit Druck beaufschlagt werden. Dabei muss gerade soviel Druck aufgebracht werden, dass das Flüssigkristallmaterial in einen innigen Kontakt mit einer Werkzeugoberfläche, die glatt oder mit einem Oberflächenrelief ausgebildet sein kann, gebracht wird. Für ein dünnflüssig ausgebildetes Flüssigkristallmaterial ist ein sehr niedriger Andruck, für ein dickflüssiges oder zähes Flüssigkristallmaterial ein höherer Andruck der Werkzeugoberfläche nötig. So kann es bei einem dünnflüssigen Flüssigkristallmaterial bereits ausreichend sein, eine Werkzeugoberfläche lediglich in Kontakt mit dem Flüssigkristallmaterial zu bringen und die Werkzeugoberfläche anschließend wieder zu entfernen, um genau im Kontaktbereich eine räumliche Orientierung der Flüssigkristalle zu erzeugen.

Die Orientierung der Flüssigkristalle in der Schichtlage bleibt erhalten, nachdem die Druckbelastung weggenommen bzw. die Werkzeugoberfläche vom Flüssigkristallmaterial entfernt wird. Flüssigkristalle werden im Sinne der Erfindung als orientiert betrachtet, wenn eine anisotrope räumliche Ausrichtung der Flüssigkristallmoleküle vorliegt. Flüssigkristalle werden als nicht-orientiert betrachtet, wenn eine isotrope räumliche Ausrichtung der Flüssigkristallmoleküle vorliegt.

Es hat sich überraschender Weise gezeigt, dass auch ohne die bisher übliche Verwendung einer Orientierungsschicht oder einer die Flüssigkristalle orientierenden Oberfläche auf einem Trägersubstrat eine Orientierung bzw. anisotrope räumliche Ausrichtung von Flüssigkristallmolekülen auf einem Trägersubstrat erfolgen kann. Aufgrund der Druckbelastung bzw. auch lediglich eines in Kontakt Bringens mit einer Werkzeugoberfläche erfolgt innerhalb der Schichtlage eine Selbstorganisation der Flüssigkristalle, wobei nun beliebige Trägersubstrate eingesetzt werden können, da deren Ausgestaltung nicht mehr oder zumindest nicht mehr wesentlich zur Orientierung der Flüssigkristalle beitragen muss. Eine chemische oder physikalische Vorbehandlung bzw. eine Strukturierung der Oberfläche des Trägersubstrats kann entfallen.

Zur Durchführung des erfindungsgemäßen Verfahrens können somit auch kostengünstige Materialien als Trägersubstrate in direktem Kontakt zur Flüssigkristallschicht verwendet werden, die keinerlei Orientierung der Flüssigkristalle bewirken.

Dies ermöglicht, ausgehend von der Schichtlage enthaltend nicht-orientierte Flüssigkristalle, nahezu unbegrenzte Möglichkeiten für die Bildung von Bereichen mit orientierten Flüssigkristallen in der Flüssigkristallschicht, da lediglich die Ausgestaltung und Anordnung des/der, die Druckbelastung aufbauenden Werkzeugs/Werkzeuge und ggf. deren Oberfläche für die Bildung dieser Bereiche maßgeblich ist. Die Wahl des Werkzeugs kann dabei erst nach Bildung des Verbunds aus Trägersubstrat und Schichtlage erfolgen.

Die Erfindung betrifft somit ein einfaches Verfahren zur Herstellung einer vernetzten, polymeren Flüssigkristallschicht enthaltend orientierte Flüssigkristalle, die einen blickwinkelabhängigen Farbwechseleffekt zeigen, welches an das Trägersubstrat, auf dem die Flüssigkristallschicht gebildet wird, keinerlei Anforderungen stellt.

Eine Orientierung der Flüssigkristalle in der Schichtlage, insbesondere lediglich in Bereichen der Schichtlage, kann somit getrennt von der Herstellung des Verbunds aus Trägersubstrat und Schichtlage vorgenommen werden und daher auch erst beim Endanwender erfolgen. Somit kann zwischen der Bildung der Schichtlage aus dem Flüssigkristallmaterial enthaltend nicht-orientierte Flüssigkristalle und einem Orientieren zumindest eines Teils der Flüssigkristalle in der Schichtlage durch zumindest partielles Aufbringen einer Druckbelastung auf die Schichtlage eine große Zeitspanne liegen. Die Verfahrensschritte der Schichtbildung und der Orientierung von Flüssigkristallen, insbesondere lediglich in Bereichen der Schichtlage, sind voneinander entkoppelt ausführbar.

Während des Orientierungsvorganges ist dafür zu sorgen, dass die Flüssigkristalle im Flüssigkristallmaterial eine noch ausreichende Beweglichkeit aufweisen, um orientiert werden zu können. Um einem Endanwender einen Verbund aus einer Schichtlage aus Flüssigkristallmaterial enthaltend nicht-orientierte Flüssigkristalle und einem Trägersubstrat bereitzustellen, wird die Schichtlage mit einer ablösbaren Abdeckung, beispielsweise aus Silikonpapier, bedeckt und auf eine Rolle aufgewickelt, da die Konsistenz der Schichtlage meist klebrig oder wachsartig eingestellt wird, um die noch ausreichende Beweglichkeit der Flüssigkristallmoleküle zu gewährleisten.

Trägersubstrate werden verwendet, deren Oberfläche im Hinblick auf die Flüssigkristalle nicht-orientierend oder nicht ausreichend orientierend ausgebildet ist, so dass der Farbeffekt nicht oder nicht deutlich genug auftritt. Somit wird eine Orientierung der Flüssigkristalle in der Schichtlage bereits bei der oder während der Bildung der Schichtlage vermieden. Besonders bevorzugt sind Trägersubstrate mit einer glatten Oberfläche zur Aufnahme des Flüssigkristallmaterials. Die Trägersubstratmaterialien werden, durch das Flüssigkristallmaterial angelöst oder aufgequollen.

Das Trägersubstrat wird einem Kunststoff, insbesondere aus Polyester, Polyolefin, PMMA oder Polyamid, gebildet. Auch die Verwendung von Kunststoff-Kompositen ist möglich.

Das Trägersubstrat wird vorzugsweise aus einem thermoplastischen Kunststoff gebildet oder auf der, mit der Flüssigkristallschicht zu beschichtenden Oberfläche eine Schicht aus thermoplastischem Kunststoff aufgebracht, wobei der thermoplastische Kunststoff zumindest bereichsweise die Oberfläche zur Aufnahme des Flüssigkristallmaterials bildet.

Es ist aber grundsätzlich jedes starre oder flexible Trägersubstrat verwendbar. Starre Substrate, welche üblicherweise in einer Dicke von 0,5 bis 10 mm eingesetzt werden, werden insbesondere aus PMMA gebildet. Als flexible Substrate eignen sich biegsame, dünne Folien, insbesondere mit einer Dicke im Bereich von 12 µm bis 3 mm, beispielsweise aus Polyester oder weiteren zuvor genannten Kunststoffen.

Es hat sich als vorteilhaft erwiesen, wenn das Trägersubstrat transparent ausgebildet wird. Dadurch ist eine Kombination mit unterschiedlichsten opaken oder transparenten, gegebenenfalls auch opak farbigen oder transparent farbigen Untergründen möglich.

Bei dem erfindungsgemäßen Verfahren können natürlich nicht nur Trägersubstrate eingesetzt werden, die keinerlei orientierende Wirkung auf die Flüssigkristalle ausüben, sondern auch weiterhin Trägersubstrate mit, die Flüssigkristalle zumindest geringfügig orientierenden Oberflächen, wobei der Anteil der orientierten Flüssigkristalle durch das erfindungsgemäße Verfahren gesteigert, der Farbeffekt verbessert und zusätzliche Farb- und Struktureffekte erzeugt werden können.

Es hat sich bewährt, wenn das Flüssigkristallmaterial in den flüssigen Zustand überführt wird, indem es erwärmt wird. Dabei wird Flüssigkristallmaterial, das bei Raumtemperatur in wachsartiger Form vorliegt, auf eine Temperatur erwärmt, bei der es in flüssiger Form vorliegt, insbesondere auf eine Temperatur im Bereich von etwa 60 bis 120°C.

Das auf der Oberfläche des Trägersubstrats aufgetragene erwärmte, flüssige Flüssigkristallmaterial kann daraufhin unmittelbar als Schichtlage angesehen werden und mit Druck beaufschlagt werden. Vorzugsweise wird aber eine Schichtlage gebildet, indem das Flüssigkristallmaterial abgekühlt wird. Dabei wird das Flüssigkristallmaterial insbesondere soweit abgekühlt, dass es auf der Oberfläche des Trägersubstrats nicht mehr verläuft.

Alternativ wird das Flüssigkristallmaterial in den flüssigen Zustand überführt, indem eine Lösung enthaltend zumindest ein Lösungsmittel und das Flüssigkristallmaterial gebildet wird. Vorzugsweise weist die Lösung weniger als 60% Flüssigkristallmaterial auf. Die Schichtlage wird hierbei gebildet, indem das mindestens eine Lösungsmittel der Lösung zumindest teilweise verdampft wird. Dabei wird das mindestens eine Lösungsmittel insbesondere soweit verdampft, dass das Flüssigkristallmaterial auf der Oberfläche des Trägersubstrats nicht mehr verläuft. Die Verdampfung des Lösemittels bzw. die physikalische Trocknung der Lösung erfolgt insbesondere bis zu einem Restlösemittelgehalt in der Schichtlage von kleiner 20%.

Eine bevorzugte Dicke der gebildeten Schichtlage aus Flüssigkristallmaterial enthaltend nicht-orientierte Flüssigkristalle liegt im Bereich von 0,5 bis 20 µm.

Insbesondere ist es bevorzugt, wenn eine nematische oder cholesterische Orientierung der Flüssigkristalle erfolgt.

Die Aufgabe wird weiterhin von einer Vorrichtung zur Durchführung des Verfahrens gelöst, die
A) eine Transporteinrichtung zur Förderung des Trägersubstrats;
B) eine Beschichtungsstation zum vollflächigen oder bereichsweisen Auftrag des Flüssigkristallmaterials im flüssigen Zustand auf das Trägersubstrat;
C) optional eine Station zur Bildung der Schichtlage;
D) eine Orientierungsstation zur zumindest bereichsweisen Beaufschlagung der Schichtlage mit einer Druckbelastung; und
E) eine Vernetzungsstation zum Vernetzen der Schichtlage unter Bildung der vernetzten, polymeren Flüssigkristallschicht,
wobei die Transporteinrichtung das Trägersubstrat nacheinander den Stationen B) bis E) zuführt.

Eine derartige Vorrichtung ist einfach und daher kostengünstig. Insbesondere ist die Trennung der Station B), gegebenenfalls der Stationen B) und C), von der Station D) von Vorteil, da dadurch die Bildung der Schichtlage aus Flüssigkristallmaterial örtlich und zeitlich getrennt von einer Orientierung der Flüssigkristalle, erfolgen kann. Insbesondere erfolgt die Orientierung von Flüssigkristallen in der Schichtlage, vorzugsweise lediglich von Flüssigkristallen in Bereichen der Schichtlage, sowie die Vernetzung erst beim Endanwender der vernetzten polymeren Flüssigkristallschicht.

Es hat sich bewährt, wenn die Transporteinrichtung zur kontinuierlichen Förderung des Trägersubstrats eingerichtet ist.

Es hat sich bewährt, wenn die Orientierung der Flüssigkristalle lediglich in Bereichen der Schichtlage erfolgt, insbesondere mittels mindestens eines Werkzeugs erfolgt, das in Kontakt mit der Schichtlage gebracht wird, insbesondere mittels mindestens eines Stempels und/oder mindestens einer Walze. Dabei kann vorgesehen sein, dass der mindestens eine Stempel und/oder die mindestens eine Walze beheizt ist. Beim Einsatz eines Stempels treten im Wesentlichen nur senkrecht auf die Ebene des beschichteten Trägersubstrats einwirkende Kräfte auf, während beim Einsatz einer Walze zusätzlich zu den senkrechten Kräften auch Scherkräfte auftreten. Unter einer Druckbelastung wird hier beides verstanden. Die Topographie des Werkzeugs ist maßgebend für die Orientierung der Flüssigkristalle.

Das Werkzeug ist im Bereich der Orientierungsstation angeordnet. In dem Bereich, in dem das Werkzeug eine Druckbelastung der Schichtlage erzeugt, richten sich die Flüssigkristalle aus und erzeugen einen Farbeffekt. Um die erforderliche Druckbelastung definiert aufbringen zu können, hat es sich bewährt, wenn eine Gegendruckfläche für das Werkzeug durch einen Gegendruckstempel und/oder eine Gegendruckwalze bereitgestellt wird. Die Gegendruckfläche kann dabei glatt oder mit einem Oberflächenrelief strukturiert ausgebildet sein.

Dabei muss gerade soviel Druck aufgebracht werden, dass das Flüssigkristallmaterial in einen innigen Kontakt mit einer Werkzeugoberfläche, die glatt oder mit einem Oberflächenrelief ausgebildet sein kann, gebracht wird. Für ein dünnflüssig ausgebildetes Flüssigkristallmaterial ist ein sehr niedriger Andruck, für ein dickflüssiges oder zähes Flüssigkristallmaterial ein höherer Andruck der Werkzeugoberfläche nötig. So kann es bei einem dünnflüssigen Flüssigknstalimaterial bereits ausreichend sein, eine Werkzeugoberfläche lediglich in Kontakt mit dem Flüssigkristallmaterial zu bringen und die Werkzeugoberfläche anschließend wieder zu entfernen, um genau im Kontaktbereich eine räumliche Orientierung der Flüssigkristalle zu erzeugen.

Der mindestens eine Stempel und/oder die mindestens eine Walze können mit einer glatten Oberfläche ausgebildet sein, welche in Kontakt mit der Schichtlage gebracht wird. Es hat sich aber bewährt, wenn der mindestens eine Stempel und/oder die mindestens eine Walze mit einem erhabenen Oberflächenrelief ausgebildet werden und die Orientierung der Flüssigkristalle lediglich in den Bereichen der Schichtlage erfolgt, in denen das Oberflächenrelief in Kontakt mit der Schichtlage gebracht wird. Bildet das Oberflächenrelief beispielsweise ein erhabenes Linienmuster, erfolgt in der Schichtlage nur in den Bereichen eine Orientierung der Flüssigkristalle, in denen die erhabenen Linien die erforderliche Druckbelastung auf die Schichtlage ausüben. In der Schichtlage werden somit Bereiche mit nicht-orientierten Flüssigkristallen neben linienförmigen Bereichen mit orientierten Flüssigkristallen ausgebildet. Ebenso können aber auch die Gegendruckflächen ein erhabenes Oberflächenrelief aufweisen, das die Druckbelastung aufbringt. Wird mit einer strukturierten Gegendruckfläche gearbeitet, so wird der Druck auf die Schicht aus Flüssigkristallmaterial vorzugsweise so hoch gewählt, dass dich das Oberflächenrelief der Gegendruckfläche das das Trägersubstrat hindurch abbilden kann. Dabei lassen sich aber lediglich ungenau dimensionierte, größere Bereiche mit ausgerichteten Flüssigkristallen erzeugen.

Die Höhe der auf die Schichtlage aufgebrachten Druckbelastung ist je nach Konsistenz des Flüssigkristallmaterials in weiten Grenzen variabel. Vorzugsweise wird die Druckbelastung auf die Schichtlage im Bereich von 1 bis 10 N/cm² gewählt. Dabei reicht zur Umorientierung von Flüssigkristallen in der Schichtlage ein Zeitraum von weniger als 1 Sekunde aus, während der die Schichtlage mit Druck beaufschlagt werden muss.

Nachdem die Schichtlage während der Orientierung der Flüssigkristalle noch eine ausreichende Bewegungsfreiheit für die zu orientierenden Flüssigkristalle bereitstellen muss, wird die Schichtlage entweder relativ weich und klebrig ausgebildet oder aber kurz vor oder während des Orientierungsvorgangs durch Erwärmen oder anderweitige Behandlung in einen entsprechenden Zustand versetzt. Ein Erwärmen kann unmittelbar dadurch erfolgen, dass ein beheiztes Werkzeug gegen die Schichtlage gedrückt wird oder dass ein Heißluftgebläse, ein IR-Strahler oder ähnliches vorgesehen wird.

Wird eine weiche, klebrige Schichtlage vorgesehen, so kann zwischen der Schichtlage und dem Werkzeug eine Zwischenschicht vorgesehen werden, die ein Anhaften von Material der Schichtlage am Werkzeug erschwert. So kann zwischen der Schichtlage und dem Werkzeug als Zwischenschicht eine Folienbahn angeordnet werden. Allerdings ist in diesem Fall lediglich die Übertragung eines groben Musters oder großflächiger Strukturbereiche des Werkzeugs möglich.

Die Folienbahn kann dabei derart ausgestaltet sein, dass diese transparent ist und auf der vernetzten Flüssigkristallschicht verbleibt. Die Folienlage darf die Vernetzung des Flüssigkristallmaterials nicht behindern. Wird das Flüssigkristallmaterial durch Bestrahlung vernetzt, so ist entweder das Trägersubstrat oder die Folienbahn durchlässig für die jeweilige Strahlung auszubilden. Dies gilt auch für etwaige zwischen Trägersubstrat und Flüssigkristallmaterial oder Folienbahn und Flüssigkristallmaterial vorgesehenen Schichten.

Die Folienbahn kann aber auch wieder entfernt werden nachdem die Orientierung der Flüssigkristalle mittels des Werkzeugs erfolgt ist. Eine Entfernung der Folienbahn vor dem Vernetzen der Schichtlage oder erst nach dem Vernetzen von der bereits vernetzten Flüssigkristallschicht ist möglich.

Als Material zur Bildung der Folienlage hat sich ein Polyester oder ein Polyolefin bewährt. Soll die Folienbahn wieder entfernt werden, so wird diese gegebenenfalls auf der, der Schichtlage zugewandten Seite mit einer Ablöseschicht aus Wachs oder Silikon beschichtet.

Weiterhin hat es sich bewährt, wenn das Werkzeug zumindest im Bereich der Flächen, die in direkten Kontakt zur Schichtlage gelangen, mit einer Zwischenschicht in Form einer Antihaftschicht, insbesondere aus Wachs oder Silikon, beschichtet sind.

Aber auch ein geringfügiger Materialabtrag der Schichtlage durch das Werkzeug ist akzeptabel, sofern eine Mindestschichtdicke der späteren vernetzten Flüssigkristallschicht nicht unterschritten wird, die zur Erzeugung des blickwinkelabhängigen Farbwechseleffekts notwendig ist. Die Mindestschichtdicke cholesterischer Flüssigkristallschichten liegt bei etwa 3 µm, während die Mindestschichtdicke nematischer Flüssigkristallschichten im Bereich von etwa 1 µm liegt.

Vorzugsweise erfolgt eine Reinigung, bei kontinuierlichen Verfahren insbesondere eine Inline-Reinigung, des Werkzeugs zwischen zwei nacheinander folgenden Zeitpunkten, an denen das Werkzeug in Kontakt zur Schichtlage gebracht wird.

Flexible Trägersubstrate eignen sich besonders zur Durchführung eines kontinuierlichen Herstellungsprozesses, bei dem das Trägersubstrat kontinuierlich von Rolle zu Rolle transportiert wird. Die Transportvorrichtung der Vorrichtung ist hierbei durch die beiden drehbar gelagerten Rollen gebildet, wobei die das Trägersubstrat inklusive der Flüssigkristallschicht aufwickelnde Rolle mittels eines Motors oder ähnlichem angetrieben ist. Das Trägersubstrat wird dabei auf eine Vorratsrolle aufgewickelt bereitgestellt. Von der Vorratsrolle wird es kontinuierlich abgezogen und der Beschichtungsstation zum vollflächigen oder bereichsweisen Auftrag des Flüssigkristallmaterials zugeführt. In der Beschichtungsstation erfolgt der Auftrag vorzugsweise mittels Aufdrucken, Rakeln, Sprühen usw.. Insbesondere ist die Verwendung eines Tintenstrahldruckers, eines Tiefdruckwerks, eines Flexodruckwerks, eines Siebdruckwerks oder mindestens einer Auftragsdüse zum Aufbringen des in flüssiger Form vorliegenden Flüssigkristallmaterials bevorzugt. Es ist möglich, dass die Beschichtungsstation einen Tintenstrahldrucker, ein Tiefdruckwerk, ein Flexodruckwerk, ein Siebdruckwerk oder mindestens eine Auftragsdüse umfasst.

Das Trägersubstrat wird optional einer Station zur Bildung der Schichtlage zugeführt, die eine Abkühlung des erwärmten Flüssigkristallmaterials bei gleichzeitiger Erhöhung der Viskosität des Flüssigkristallmaterials oder eine Trocknung der Lösung enthaltend das Flüssigkristallmaterial bewirkt. Eine Abkühlung des Flüssigkristallmaterials wird vorzugsweise mittels einer Kältekammer und/oder eines Gebläses bewirkt. Bei Verwendung einer Lösung wird deren physikalische Trocknung bevorzugt in einer Trocknungsstation bewirkt, wobei die Trocknung insbesondere mittels eines Gebläses und/oder eines Infrarotstrahlers erfolgt. Dabei kann die Trocknungsstation ein Gebläse und/oder einen Infrarotstrahler umfassen.

Danach wird das Trägersubstrat der Orientierungsstation zur zumindest bereichsweisen Beaufschlagung der Schichtlage mit einer Druckbelastung zugeführt. Dazu werden Stempel oder Walzen eingesetzt.

Anschließend erfolgt ein Weitertransport des Trägersubstrats zu einer Vernetzungsstation, welche eine Vernetzung der Schichtlage unter Bildung der Flüssigkristallschicht bewirkt. Die zur Vernetzung notwendigen Prozessbedingungen sind durch das jeweilige Flüssigkristallmaterial vorgegeben. Die Mehrzahl der handelsüblichen Flüssigkristallmaterialien sind strahlungshärtend, jedoch existieren auch Flüssigkristallmaterialien, die thermisch-induziert vernetzen.
Die Vernetzung der Schichtlage erfolgt insbesondere durch Bestrahlung, wobei eine Bestrahlung mittels UV-Strahlung oder IR-Strahlung bevorzugt ist.

Vorzugsweise weist die Vernetzungsstation mindestens einen UV-Strahler oder mindestens eine IR-Strahler auf.

Es hat sich weiterhin bewährt, wenn die Vernetzung der Schichtlage in einer inerten Atmosphäre, insbesondere unter Inertgas wie beispielsweise Formiergas, Argon oder Stickstoff, erfolgt.

Schließlich erfolgt eine Aufwicklung auf die angetriebene Rolle der Transportstation.

Das Trägersubstrat kann bereits in der gewünschten/benötigten Dimension vorliegen oder nach Bildung der Flüssigkristallschicht zerteilt werden. Das Verfahren, welches sich für ein Zerteilen eignet, hängt vom Material des Trägersubstrats ab. In Frage kommen hier insbesondere ein Zerteilen mittels Schneiden oder Stanzen.

Eine Orientierung von Flüssigkristallen in lediglich Bereichen der Schichtlage ist bevorzugt. Vorzugsweise werden diese Bereiche der Schichtlage (senkrecht zur Ebene der Schichtlage gesehen), in denen die Flüssigkristalle orientiert werden, in Form von alphanumerischen Zeichen oder Zeichenketten, Symbolen, Logos, Bildern oder Mustern ausgebildet.

Generell ist eine minimale Linienbreite des orientierten Flüssigkristallmaterials durch die Auflösung des verwendeten Werkzeugs bestimmt und liegt daher im Sub-Mikronbereich, insbesondere bis zu einer minimalen Linienbreite von 0,1 µm. Eine mit dem menschlichen Auge noch ohne Hilfsmittel erkennbare Linienbreite des orientierten Flüssigkristallmaterials im Bereich von 50 bis 100 µm ist jedoch bevorzugt.

Weiterhin hat es sich bewährt, wenn auf die, dem Trägersubstrat abgewandte Seite der vernetzten Flüssigkristallschicht eine Kleberschicht aufgebracht wird. Mittels einer derartigen Kleberschicht kann eine Befestigung der vernetzten Flüssigkristallschicht, gegebenenfalls auch des gegebenenfalls zerteilten Trägersubstrats, an einem Sicherheitsdokument erfolgen. Eine Anordnung der Flüssigkristallschicht in Form eines Patches, eines Streifens oder auch vollflächig in Form eines Overlays auf dem Sicherheitsdokument ist möglich. Die Kleberschicht kann dazu aber genauso auf der Seite des Trägersubstrats angeordnet werden, die der Flüssigkristallschicht abgewandt ist oder unmittelbar auf dem Sicherheitsdokument aufgebracht sein.

Weiterhin kann eine Anordnung der vernetzten Flüssigkristallschicht in einer Fensteröffnung eines Sicherheitsdokuments erfolgen, wobei als Fensteröffnung nicht nur mechanische Durchbrüche im Sicherheitsdokument, sondern auch durchsichtige Bereiche des Sicherheitsdokuments bezeichnet werden.

Unter einem Sicherheitsdokument wird hier ein Ausweis, ein Pass, eine Bankkarte eine Identitätskarte, eine Banknote, eine Urkunde, ein Führerschein, ein Wertpapier und ähnliches verstanden. Neben der vernetzten Flüssigkristallschicht kann das Sicherheitsdokument weitere Sicherheitselemente aufweisen, wie einen filigranen Sicherheitsaufdruck, Guillochen, optisch variable Elemente wie Hologramme, Kinegram^{®}e, lumineszierende, magnetische, photochrome, thermochrome oder elektrisch leitende Elemente, Dünnfilm-Interferenzschichtstapel mit blickwinkelabhängigem Farbwechseleffekt, ZOD-Elemente (ZOD: zero order diffraction), oder auch Linsenstrukturen usw..

Wird das Trägersubstrat derart ausgebildet, dass die vernetzte Flüssigkristallschicht von dieser ablösbar ist, so kann der Schichtverbund aus Trägersubstrat und Flüssigkristallschicht als Transferfolie eingesetzt werden, wobei die Flüssigkristallschicht, gegebenenfalls inklusive weiterer Schichten wie der Kleberschicht, als Übertragungslage fungiert.

Die Verwendung eines Trägersubstrats als Träger bei der Bildung einer vernetzten, polymeren Flüssigkristallschicht enthaltend nematisch oder cholesterisch orientierte Flüssigkristalle, wobei das Trägersubstrat derart ausgebildet ist, dass eine automatische Orientierung der Flüssigkristalle eines in flüssigem Zustand vorliegenden Flüssigkristallmaterials zur Bildung der Flüssigkristallschicht, das auf eine Oberfläche des Trägersubstrats aufgetragen wird, unterbleibt, ist ideal

Insbesondere ist dabei bevorzugt, wenn die Oberfläche des Trägersubstrats aus einem Kunststoff gebildet wird, der durch das, in flüssigem Zustand vorliegende Flüssigkristallmaterial angelöst oder angequollen wird.

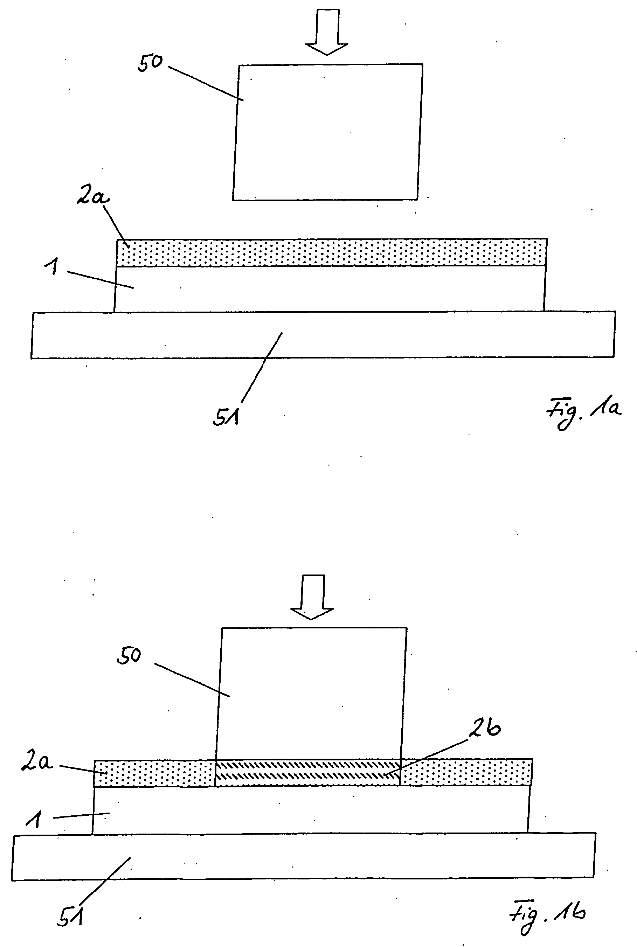

Die Figuren 1a bis 3 zeigen beispielhaft ein geeignetes Verfahren sowie schematisch eine Vorrichtung zur Durchführung eines Verfahrens. So zeigt
- Figur. 1a: ein Trägersubstrat inklusive einer Schichtlage und ein Werkzeug im Querschnitt;

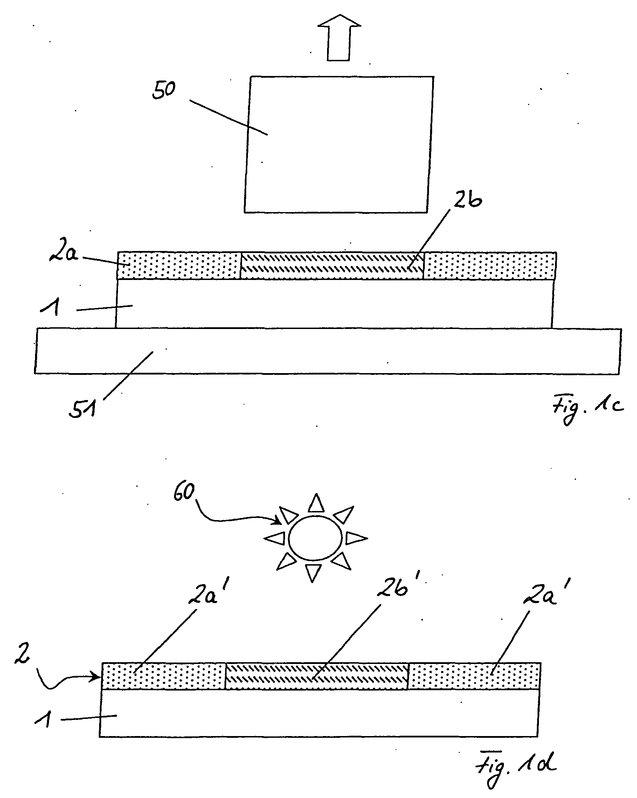

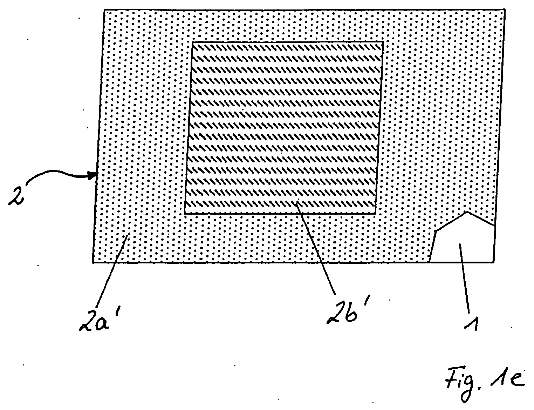

- Figur 1 b: das Trägersubstrat inklusive der Schichtlage aus Figur 1 a mit abgesenktem Werkzeug im Querschnitt;
- Figur 1 c: das Trägersubstrat inklusive der Schichtlage aus Figur 1 b nach Anheben des Werkzeugs im Querschnitt;
- Figur 1d: eine Vernetzung der Schichtlage gemäß Figur 1c auf dem Trägersubstrat im Querschnitt;
- Figur 1e: die gemäß Figur 1d gebildete Flüssigkristallschicht in der Draufsicht;
- Figur 2a: ein Trägersubstrat inklusive einer Schichtlage und ein Werkzeug mit Oberflächenrelief im Querschnitt;
- Figur 2b: das Trägersubstrat inklusive der Schichtlage aus Figur 2a mit abgesenktem Werkzeug im Querschnitt;
- Figur 2c: das Trägersubstrat inklusive der Schichtlage aus Figur 2b nach Anheben des Werkzeugs im Querschnitt;
- Figur 2d: eine Vernetzung der Schichtlage gemäß Figur 2c auf dem Trägersubstrat im Querschnitt;
- Figur 2e: die gemäß Figur 2d gebildete Flüssigkristallschicht in der Draufsicht;
und
- Figur 3: schematisch eine Vorrichtung zur kontinuierlichen Durchführung des Verfahrens.

Figur 1 a zeigt im Querschnitt ein flexibles, transparentes Trägersubstrat 1 aus PET mit einer Schichtdicke von 25 µm, auf welchem bereits eine Schichtlage 2a enthaltend nicht-orientierte Flüssigkristalle mit einer Schichtdioke von 10µm angeordnet ist. Zur Bildung der Schichtlage 2a wurde eine Lösung eines cholesterischen Flüssigkristallmaterials vom Typ RMS 24 der Firma Merck mit 50 % Festkörper in Toluol als Lösungsmittel eingesetzt. Diese Lösung wurde auf das Trägersubstrat 1 aufgerakelt und physikalisch getrocknet, um die Schichtlage 2a auszubilden.

Das Trägersubstrat 1 befindet sich auf einer ebenen Gegendruckplatte 51. Über dem Trägersubstrat 1 und der Schichtlage 2a ist ein Werkzeug in Form eines Stempels 50 angeordnet, der auf die Schichtlage 2a abgesenkt werden kann (siehe Pfeil) und die Schichtlage 2a im Kontaktbereich mit Druck beaufschlagen kann.

Figur 1b zeigt im Querschnitt das Trägersubstrat 1 inklusive der Schichtlage 2a aus Figur 1a mit abgesenktem Stempel 50. Im Kontaktbereich des Stempels 50 zur Schichtlage 2a erfolgt aufgrund der Andruckkräfte eine Orientierung der Flüssigkristalle in der Schichtlage 2a und es entsteht ein Bereich 2b in der Schichtlage 2a enthaltend cholesterisch orientierte Flüssigkristalle.

Figur 1c zeigt im Querschnitt das Trägersubstrat 1 inklusive der Schichtlage 2a enthaltend die Bereiche 2b aus Figur 1b nach Anheben des Stempels 50. Die cholesterische Orientierung der Flüssigkristalle im Bereich 2b bleibt erhalten, wenn die Druckbelastung durch das Werkzeug, bzw. hier den Stempel 50, weggenommen wird.

Figur 1d zeigt eine Vernetzung der Schichtlage 2a enthaltend die Bereiche 2b gemäß Figur 1c auf dem Trägersubstrat 1 im Querschnitt. Ein UV-Strahler 60 bestrahlt die Schichtlage 2a und die Bereiche 2b und führt zu einer Umwandlung der Schichtlage 2a enthaltend den Bereich 2b in eine vernetzte Flüssigkristallschicht 2 mit Bereichen 2a' ohne eine Orientierung der Flüssigkristalle und einem Bereich 2b', der cholesterisch orientierte Flüssigkristalle aufweist. In der gebildeten Flüssigkristallschicht 2 ist die cholesterische Ausrichtung der Flüssigkristalle nun fixiert und kann nicht mehr verändert werden.

Figur 1e zeigt die gemäß Figur 1d gebildete Flüssigkristallschicht 2 in der Draufsicht. Der Betrachter erkennt, wenn die Flüssigkristallschicht 2 vor einem opaken Hintergrund betrachtet wird, im Bereich 2b', der cholesterisch orientierte Flüssigkristalle aufweist, einen Farbeffekt, der abhängig vom Blickwinkel des Betrachters seine Farbe wechselt (hier von rot-gold nach grün-gold). Im Bereich 2a', der nicht-orientierte Flüssigkristalle aufweist, erkennt der Betrachter keinen Farbeffekt, sondern ein leicht milchig-weißes, transparentes Erscheinungsbild. Im Durchlicht gesehen - also ohne opaken Hintergrund - erscheinen die Bereiche 2a' der Flüssigkristallschicht 2, die nicht-orientierte Flüssigkristalle aufweisen, ebenfalls milchig-weiß und transparent. Der Bereich 2b' der Flüssigkristallschicht 2, der cholesterisch orientierte Flüssigkristalle aufweist, erscheint im Durchlicht gesehen farblos transparent.

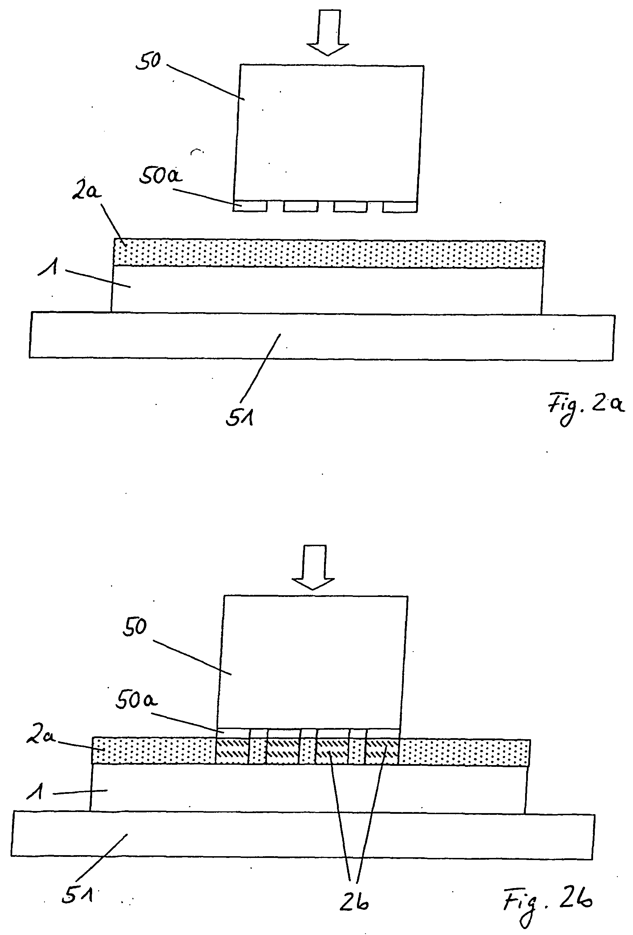

Figur 2a zeigt im Querschnitt ein transparentes Trägersubstrat 1 aus Acrylglas mit einer Schichtdicke von 2 mm, auf welchem bereits eine Schichtlage 2a enthaltend nicht-orientierte Flüssigkristalle (wie zu Figur 1a beschrieben gebildet) angeordnet ist. Das Trägersubstrat 1 befindet sich auf einer ebenen Gegendruckplatte 51 und über dem Trägersubstrat 1 und der Schichtlage 2a ist ein Werkzeug in Form eines Stempels 50 angeordnet, der ein erhabenes Oberflächenrelief 50a aufweist und auf die Schichtlage 2a abgesenkt werden kann (siehe Pfeil), um die Schichtlage 2a im Kontaktbereich mit Druck beaufschlagen zu können.

Figur 2b zeigt im Querschnitt das Trägersubstrat 1 inklusive der Schichtlage 2a aus Figur 2a mit abgesenktem Stempel 50. Im Kontaktbereich des Oberflächenreliefs 50a des Stempels 50 zur Schichtlage 2a erfolgt aufgrund der Andruckkräfte eine Orientierung der Flüssigkristalle in der Schichtlage 2a und es entstehen musterförmige Bereiche 2b in der Schichtlage 2a, welche cholesterisch orientierte Flüssigkristalle enthalten.

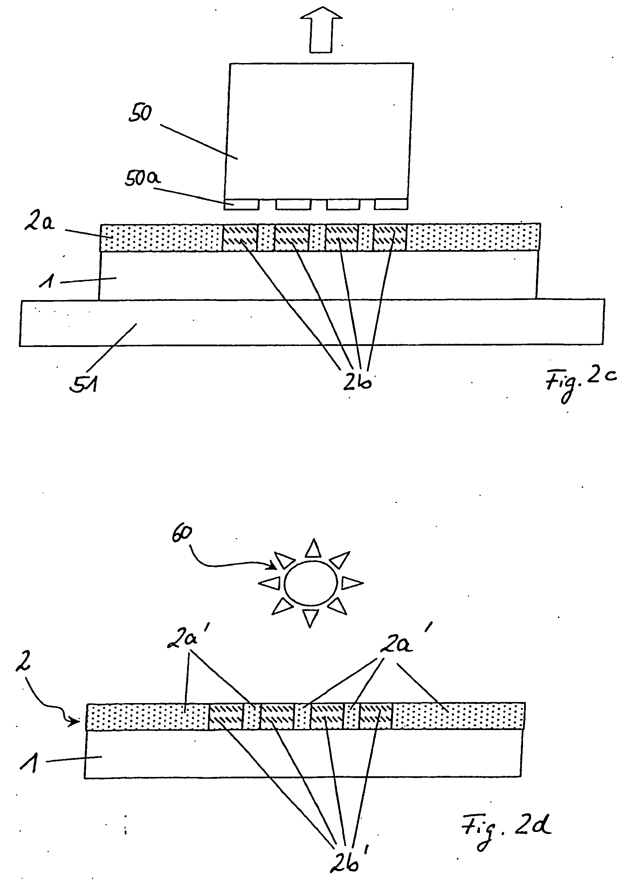

Figur 2c zeigt im Querschnitt das Trägersubstrat 1 inklusive der Schichtlage 2a enthaltend die Bereiche 2b aus Figur 2b nach Anheben des Stempels 50. Die cholesterische Orientierung der Flüssigkristalle in den Bereichen 2b bleibt erhalten, wenn die Druckbelastung durch das Werkzeug, bzw. hier den Stempel 50, weggenommen wird.

Figur 2d zeigt eine Vernetzung der Schichtlage 2a enthaltend die Bereiche 2b gemäß Figur 2c auf dem Trägersubstrat 1 im Querschnitt. Ein UV-Strahler 60 bestrahlt die Schichtlage 2a und die Bereiche 2b und führt zu einer Umwandlung der Schichtlage 2a enthaltend die Bereiche 2b in eine vernetzte Flüssigkristallschicht 2 mit Bereichen 2a' ohne eine Orientierung der Flüssigkristalle und einem Bereich 2b', der cholesterisch orientierte Flüssigkristalle aufweist. In der gebildeten Flüssigkristallschicht 2 ist die cholesterische Ausrichtung der Flüssigkristalle nun fixiert und kann nicht mehr verändert werden.

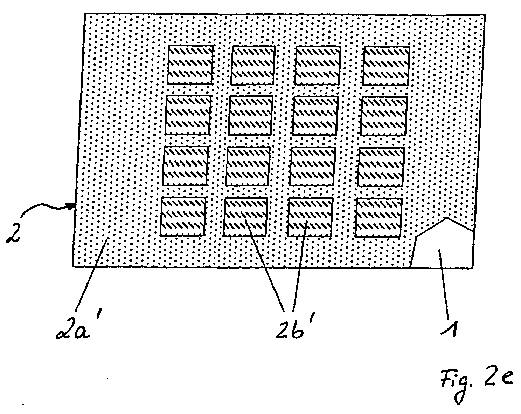

Figur 2e zeigt die gemäß Figur 2d gebildete Flüssigkristallschicht 2 in der Draufsicht. Der Betrachter erkennt, wenn die Flüssigkristallschicht 2 vor einem opaken Hintergrund betrachtet wird, in den musterförmigen Bereichen 2b', die cholesterisch orientierte Flüssigkristalle aufweisen, einen Farbeffekt, der abhängig vom Blickwinkel des Betrachters seine Farbe wechselt (hier von rot-gold nach grün-gold). Im Bereich 2a', der nicht-orientierte Flüssigkristalle aufweist, erkennt der Betrachter keinen Farbeffekt, sondern ein leicht milchig-weißes, transparentes Erschienungsbild. Im Durchlicht gesehen - also ohne opaken Hintergrund - erscheinen die Bereiche 2a' der Flüssigkristallschicht 2, die nicht-orientierte Flüssigkristalle aufweisen, ebenfalls milchig-weiß und transparent. Die musterförmigen Bereiche 2b' der Flüssigkristallschicht 2, die cholesterisch orientierte Flüssigkristalle aufweisen, erscheinen im Durchlicht gesehen farblos transparent.

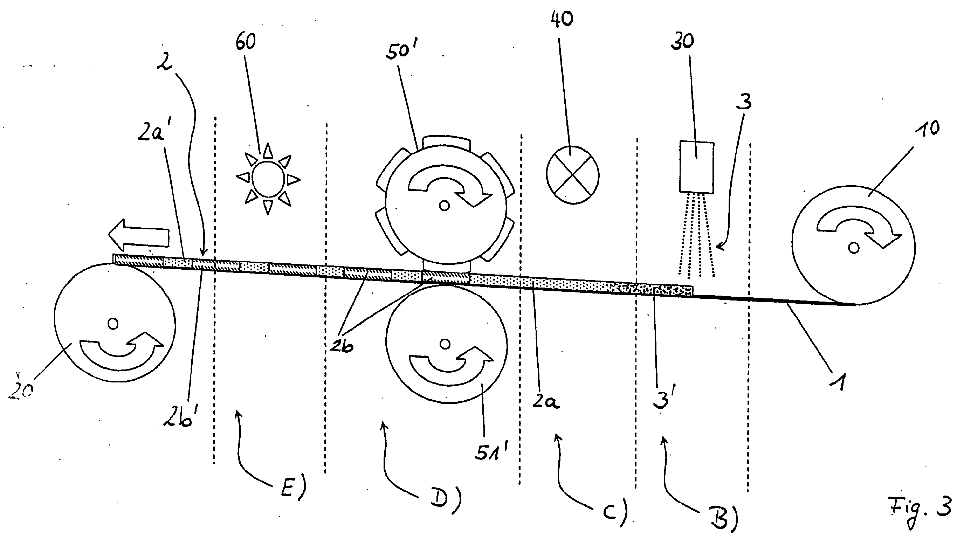

Figur 3 zeigt schematisch eine mögliche Vorrichtung zur Durchführung eines kontinuierlichen Verfahrens. Ein flexibles Trägersubstrat 1 aus PET in einer Schichtdicke von 19 µm wird kontinuierlich von einer Vorratsrolle 10 abgezogen, zu einer weiteren, mittels eines Motors angetriebenen Rolle 20 transportiert und auf diese wieder aufgewickelt. Die beiden drehbar gelagerten Rollen 10, 20 bilden eine Transportvorrichtung. Von der Vorratsrolle 10 wird das Trägersubstrat 1 einer Beschichtungsstation B) zugeführt. Hier wird mittels einer .Düse 30 eines nicht im Detail dargestellten Tintenstrahldruckers vollflächig eine Lösung 3 (wie zu Figur 1a beschrieben) auf das Trägersubstrat 1 aufgebracht.

Das Trägersubstrat 1 mit der Lösung 3 darauf wird dann einer Trocknungsstation C) zur physikalischen Trocknung der Lösung 3 unter Bildung der Schichtlage 2a zugeführt, wobei die Trocknung mittels eines Warmluftgebläses 40 in einem Temperaturbereich von 40 bis 60°C erfolgt. Bei Lösungsformulierungen mit weniger als 60% Festkörperanteil sind dabei Trocknungszeiten von etwa mindestens 5 Sekunden erforderlich.

Danach wird das Trägersubstrat 1 mit der Schichtlage 2a einer Orientierungsstation D) zugeführt und zwischen einer Gegendruckwalze 51' und einer strukturierten Walze 50' angeordnet. Die Walze 50' wird mit einem Druck von 5 N/cm² gegen die Bereiche 2b der Schichtlage 2a gedrückt. Dabei erfolgt in den Bereichen 2b der Schichtlage 2a eine Orientierung der Flüssigkristalle.

Anschließend erfolgt ein Weitertransport des Trägersubstrats 1 und der Schichtlage 2a, welche nun die Bereiche 2b mit orientierten Flüssigkristallen aufweist, zu einer Vernetzungsstation E), welche einen UV-Strahler aufweist. Die Schichtlage 2a mit den Bereichen 2b wird unter Inertgas-Atmosphäre mit UV-Strahlung bestrahlt und eine Vernetzung der Schichtlage 2a mit den Bereichen 2b bewirkt. Es bildet sich eine vernetzte Flüssigkristallschicht 2, welche Bereiche 2a' enthaltend nicht-orientierte Flüssigkristalle und Bereiche 2b' enthaltend orientierte Flüssigkristalle aufweist. Schließlich erfolgt eine Aufwicklung des Trägersubstrat 1 und der Flüssigkristallschicht 2 auf die Rolle 20.

## Patentansprüche

1. Verfahren zur Herstellung einer vernetzten, polymeren Flüssigkristallschicht (2) enthaltend orientierte Flüssigkristalle, welche einen blickwinkelabhängigen Farbwechseleffekt zeigen, mit folgenden Schritten:
- Bereitstellen eines Flüssigkristallmaterials enthaltend orientierbare Flüssigkristalle;
- Bereitstellen eines Trägersubstrats (1), welches eine Oberflächen zur Aufnahme des Flüssigkristallmaterials aufweist;
- Aufbringen des Flüssigkristallmaterials in flüssigem Zustand auf die Oberfläche des Trägersubstrats (1);
- Bilden einer Schichtlage (2a) aus dem Flüssigkristallmaterial enthaltend nicht-orientierte Flüssigkristalle;
- Orientieren zumindest eines Teils der Flüssigkristalle in der Schichtlage (2a) durch zumindest partielles Aufbringen einer Druckbelastung auf die Schichtlage (2a); und
- Vernetzen des Flüssigkristallmaterials der Schichtlage (2a), wobei eine Fixierung der Orientierung der Flüssigkristalle erfolgt und die vernetzte, polymere Flüssigkristallschicht (2) gebildet wird,
**dadurch gekennzeichnet,**
**dass** das Flüssigkristallmaterial in den flüssigen Zustand überführt wird, indem eine Lösung (3) enthaltend zumindest ein Lösemittel und das Flüssigkristallmaterial gebildet wird, und dass die Schichtlage (2a) gebildet wird, indem das mindestens eine Lösungsmittel der Lösung (3) zumindest teilweise verdampft wird, dass das Trägersubstrat (1) eine Schicht aus thermoplastischem Kunststoff aufweist, welche zumindest bereichsweise die Oberfläche zur Aufnahme des in den flüssigen Zustand überführten Flüssigkristallmaterials bildet, wobei das Flüssigkristallmaterial mit dem Lösungsmittel einerseits und der thermoplastische Kunststoff andererseits passend zu einander ausgewählt sind, so dass der thermoplastische Kunststoff in dem in den flüssigen Zustand überführten Flüssigkristallmaterial löslich ist

2. Verfahren zur Herstellung einer vernetzten, polymeren Flüssigkristallschicht (2) enthaltend orientierte Flüssigkristalle, welche einen blickwinkelabhängigen Farbwechseleffekt zeigen, mit folgenden Schritten:
- Bereitstellen eines Flüssigkristallmaterials enthaltend orientierbare Flüssigkristalle;
- Bereitstellen eines Trägersubstrats (1), welches eine Oberfläche zur Aufnahme des Flüssigkristallmaterials aufweist;
- Aufbringen des Flüssigkristallmaterials in flüssigem Zustand auf die Oberfläche des Trägersubstrats (1);
- Bilden einer Schichtlage (2a) aus dem Flüssigkristallmaterial enthaltend nicht-orientierte Flüssigkristalle;
- Orientieren zumindest eines Teils der Flüssigkristalle in der Schichtlage (2a) durch zumindest partielles Aufbringen einer Druckbelastung auf die Schichtlage (2a); und
- Vernetzen des Flüssigkristallmaterials der Schichtlage (2a), wobei eine Fixierung der Orientierung der Flüssigkristalle erfolgt und die vernetzte, polymere Flüssigkristallschicht (2) gebildet wird,
**dadurch gekennzeichnet,**
**dass** das Flüssigkristallmaterial in den flüssigen Zustand überführt wird, indem es erwärmt wird, und dass die Schichtlage (2a) gebildet wird, indem das Flüssigkristallmaterial abgekühlt wird, dass das Trägersubstrat (1) eine Schicht aus thermoplastischen Kunststoff aufweist, welches zumindest bereichsweise die Oberfläche zur Aufnahme des in den flüssigen Zustand überführten Flüssigkristallmaterials bildet, wobei das Flüssigkristallmaterial und der thermoplastische Kunststoff passend zueinander ausgewählt sind, so dass der thermoplastische Kunststoff in dem in den flüssigen Zustand überführten Flüssigkristallmaterial quellbar ist.

3. Verfahren nach Anspruch 1 oder 2,
**dadurch gekennzeichnet,**
**dass** die Oberfläche des Trägersubstrats (1) im Hinblick auf die Flüssigkristalle nicht-orientierend ausgebildet ist.

4. Verfahren nach einem der Ansprüche 1 bis 3,
**dadurch gekennzeichnet,**
**dass** das Trägersubstrat (1) aus Polyester, Polyolefin, PMMA oder Polyamid gebildet wird.

5. Verfahren nach einem der Ansprüche 1 bis 4,
**dadurch gekennzeichnet,**
**dass** eine nematische oder cholesterische Orientierung der Flüssigkristalle erfolgt.

6. Verfahren nach einem der Ansprüche 1 bis 5,
**dadurch gekennzeichnet,**
**dass** die Orientierung der Flüssigkristalle lediglich in Bereichen der Schichtlage (2a) erfolgt, insbesondere mittels mindestens eines Werkzeugs erfolgt, das zum Aufbringen einer Druckbelastung in Kontakt mit der Schichtlage (2a) gebracht wird, insbesondere mittels mindestens eines Stempels (50) und/oder mindestens einer Walze (50').

7. Verfahren nach Anspruch 6,
**dadurch gekennzeichnet,**
**dass** der mindestens eine Stempel (50) und/oder die mindestens die eine Walze (50') mit einem erhabenen Oberflächenrelief (50a) ausgebildet wird/werden und dass die Orientierung der Flüssigkristalle lediglich in den Bereichen der Schichtlage (2a) erfolgt, in denen das Oberflächenrelief (50a) in Kontakt mit der Schichtlage (2a) gebracht wird.

8. Verfahren nach einem der Ansprüche 1 bis 7,
**dadurch gekennzeichnet,**
**dass** Bereiche der Schichtlage (2a), in denen die Flüssigkristalle orientiert werden, in Form von alphanumerischen Zeichen oder Zeichenketten, Symbolen, Logos, Bildern oder Mustern ausgebildet werden.

9. Verwendung eines Trägersubstrats (1) als Träger bei der Bildung einer vernetzten, polymeren Flüssigkristallschicht (2) enthaltend nematisch oder cholesterisch orientierte Flüssigkristalle, welches derart ausgebildet ist, dass eine automatische Orientierung der Flüssigkristalle eines durch Bilden einer Lösung mit einem Lösungsmittel in flüssigem Zustand vorliegenden, zur Bildung der Flüssigkristallschicht (2) dienenden Flüssigkristallmaterials, das auf eine Oberfläche des Trägersubstrats (1) aufgetragen wird, unterbleibt,
**dadurch gekennzeichnet,**
**dass** die Oberfläche des Trägersubstrats (1) aus einem Kunststoff gebildet wird, der passend zu dem Flüssigkristallmaterial mit dem Lösungsmittel derart ausgewählt ist, dass er durch das, in flüssigem Zustand vorliegende Flüssigkristallmaterial mit dem Lösungsmittel angelöst wird.

10. Verwendung eines Trägersubstrats (1) als Träger bei der Bildung einer vernetzten, polymeren Flüssigkristallschicht (2) enthaltend nematisch oder cholesterisch orientierte Flüssigkristalle, welches derart ausgebildet ist, dass eine automatische Orientierung der Flüssigkristalle eines durch Erwärmen in flüssigem Zustand vorliegenden Flüssigkristallmaterials zur Bildung der Flüssigkristallschicht (2), das auf eine Oberfläche des Trägersubstrats (1) aufgetragen wird, unterbleibt,
**dadurch gekennzeichnet,**
**dass** die Oberfläche des Trägersubstrats (1) aus einem Kunststoff gebildet wird, der passend zu dem Flüssigkristallmaterial derart ausgewählt ist, dass er durch das, in flüssigern Zustand vorliegende Flüssigkristallmaterial angequollen wird.

## Claims

1. Method for producing a cross-linked polymer liquid crystal layer (2) containing orientated liquid crystals which show a viewing angle-dependent colour change effect, having the following steps:
- preparing a liquid crystal material containing orientable liquid crystals;
- preparing a carrier substrate (1) which has a surface for receiving the liquid crystal material;
- applying the liquid crystal material in liquid state to the surface of the carrier substrate (1);
- forming a layer (2a) from the liquid crystal material containing non-orientated liquid crystals;
- orientating at least one part of the liquid crystals in the layer (2a) by at least partial application of a pressure load onto the layer (2a); and
- cross-linking the liquid crystal material of the layer (2a), wherein a fixing of the orientation of the liquid crystals occurs and the cross-linked polymer liquid crystal layer (2) is formed,
**characterised in that**
the liquid crystal material is transferred into the liquid state by a solution (3) containing at least one solvent and the liquid crystal material being formed, and that the layer (2a) is formed by the at least one solvent of the solution (3) being at least partially evaporated, that the carrier substrate (1) has a layer made from thermoplastic plastic which forms the surface at least in regions for receiving the liquid crystal material transferred into the liquid state, wherein the liquid crystal material with the solvent on the one hand and the thermoplastic plastic on the other hand are selected to be suitable for each other such that the thermoplastic plastic is soluble in the liquid crystal material transferred into the liquid state.

2. Method for producing a cross-linked polymer liquid crystal layer (2) containing orientated liquid crystals, which show a viewing angle-dependent colour change effect, having the following steps:
- providing a liquid crystal material containing orientable liquid crystals;
- providing a carrier substrate (1) which has a surface for receiving the liquid crystal material;
- applying the liquid crystal material in liquid state to the surface of the carrier substrate (1);
- forming a layer (2a) from the liquid crystal material containing non-orientated liquid crystals;
- orientating at least one part of the liquid crystals in the layer (2a) by at least partial application of a pressure load to the layer (2a); and
- cross-linking the liquid crystal material of the layer (2a), wherein a fixing of the orientation of the liquid crystals occurs and the cross-linked polymer liquid crystal layer (2) is formed,
**characterised in that**
the liquid crystal material is transferred into the liquid state by it being heated, and that the layer (2a) is formed by the liquid crystal material being cooled, that the carrier substrate (1) has a layer made from thermoplastic plastic which forms, at least in regions, the surface for receiving the liquid crystal material transferred into the liquid state, wherein the liquid crystal material and the thermoplastic plastic are selected to be suitable for each other such that the thermoplastic plastic is swellable in the liquid crystal material transferred into the liquid state.

3. Method according to claim 1 or 2,
**characterised in that**
the surface of the carrier substrate (1) is formed to be non-orientating with regard to the liquid crystals.

4. Method according to one of claims 1 to 3,
**characterised in that**
the carrier substrate (1) is formed from polyester, polyolefin, PMMA or polyamide.

5. Method according to one of claims 1 to 4,
**characterised in that**
a nematic or cholesteric orientation of the liquid crystals occurs.

6. Method according to one of claims 1 to 5,
**characterised in that**
the orientation of the liquid crystals occurs only in the regions of the layer (2a), in particular occurs by means of at least one tool, which is brought into contact with the layer (2a) to apply a pressure load, in particular by means of at least one stamp (50) and/or at least one roller (50').

7. Method according to claim 6,
**characterised in that**
the at least one stamp (50) and/or the at least one roller (50') is/are formed having a raised surface relief (50a), and that the orientation of the liquid crystals only occurs in the regions of the layer (2a) in which the surface relief (50a) is brought into contact with the layer (2a).

8. Method according to one of claims 1 to 7,
**characterised in that**
regions of the layer (2a) in which the liquid crystals are orientated, are formed in the form of alphanumerical characters or character strings, symbols, logos, images or patterns.

9. Use of a carrier substrate (1) as a carrier for the formation of a cross-linked polymer liquid crystal layer (2) containing nematically or cholesterically orientated liquid crystals, said carrier substrate (1) being formed in such a way that an automatic orientation of the liquid crystals of a liquid crystal material which is present in liquid statedue to formation of a solution using a solvent and serves for the formation of the liquid crystal layer (2), said liquid crystal material being applied to a surface of the carrier substrate (1), remains undone,
**characterised in that**
the surface of the carrier substrate (1) is formed from a plastic which is selected to be suitable for the liquid crystal material having the solvent in such a way that it is dissolved by the liquid crystal material present in liquid state and having the solvent.

10. Use of a carrier substrate (1) as a carrier for the formation of a cross-linked polymer liquid crystal layer (2) containing nematically or cholesterically orientated liquid crystals, said carrier substrate (1) being formed in such a way that an automatic orientation of the liquid crystals of a liquid crystal material present in liquid state by heating for the formation of the liquid crystal layer (2) which is applied to a surface of the carrier substrate (1), remains undone,
**characterised in that**
the surface of the carrier substrate (1) is formed from a plastic which is selected to be suitable for the liquid crystal material in such a way that it is swollen by the liquid crystal material present in liquid state.

## Revendications

1. Procédé servant à fabriquer une couche de cristaux liquides (2) polymère réticulée contenant des cristaux liquides orientés, qui affichent un effet de changement de couleur dépendant de l'angle d'observation, comprenant des étapes qui suivent consistant à :
- fournir un matériau à cristaux liquides contenant des cristaux liquides pouvant être orientés ;
- fournir un substrat de support (1), qui présente une surface servant à recevoir le matériau à cristaux liquides ;
- appliquer le matériau à cristaux liquides dans l'état liquide sur la surface du support de substrat (1) ;
- former une strate de couche (2a) à partir du matériau à cristaux liquides contenant des cristaux liquides non orientés ;
- orienter au moins une partie des cristaux liquides dans la strate de couche (2a) en appliquant au moins partiellement une contrainte de pression sur la strate de couche (2a) ; et
- réticuler le matériau à cristaux liquides de la strate de couche (2a), sachant qu'une fixation de l'orientation des cristaux liquides est effectuée et que la couche de cristaux liquides (2) polymère réticulée est formée,
**caractérisé en ce**
**que** le matériau à cristaux liquides est amené dans l'état liquide, en ce qu'une solution (3) contenant au moins un dissolvant et le matériau à cristaux liquides est formée, et en ce que la strate de couche (2a) est formée, en ce que le solvant au moins au nombre de un de la solution (3) est évaporé au moins en partie, en ce que le support de substrat (1) présente une couche composée d'une matière synthétique thermoplastique, qui forme au moins par endroits la surface servant à recevoir le matériau à cristaux liquides amené dans l'état liquide, sachant que le matériau à cristaux liquides comprenant le solvant d'une part et la matière synthétique thermoplastique d'autre part sont choisis de manière adaptée l'un à l'autre de sorte que la matière synthétique thermoplastique est soluble dans le matériau à cristaux liquides amené dans l'état liquide.

2. Procédé servant à fabriquer une couche de cristaux liquides (2) polymère, réticulée, contenant des cristaux liquides orientés, qui affichent un effet de changement de couleur dépendant de l'angle d'observation, comprenant des étapes qui suivent consistant à :
- fournir un matériau à cristaux liquides contenant des cristaux liquides pouvant être orientés ;
- fournir un support de substrat (1), qui présente une surface servant à recevoir le matériau à cristaux liquides ;
- appliquer le matériau à cristaux liquides dans l'état liquide sur la surface du substrat de support (1) ;
- former une strate de couche (2a) à partir du matériau à cristaux liquides contenant des cristaux liquides non orientés ;
- orienter au moins une partie des cristaux liquides dans la strate de couche (2a) en appliquant au moins partiellement une contrainte de pression sur la strate de couche (2a) ; et
- réticuler le matériau à cristaux liquides de la strate de couche (2a), sachant qu'une fixation de l'orientation des cristaux liquides est effectuée et que la couche de cristaux liquides polymère réticulée (2) est formée,
**caractérisé en ce**
**que** le matériau à cristaux liquides est amené dans l'état liquide en ce qu'il est chauffé, et en ce que la strate de couche (2a) est formée en ce que le matériau à cristaux liquides est refroidi, en ce que le substrat de support (1) présente une couche composée d'une matière synthétique thermoplastique, lequel forme au moins par endroits la surface servant à recevoir le matériau à cristaux liquides amené dans l'état liquide, sachant que le matériau à cristaux liquides et la matière synthétique thermoplastique sont choisis de manière adaptée l'un à l'autre de sorte que la matière synthétique thermoplastique peut gonfler dans le matériau à cristaux liquides amené dans l'état liquide.

3. Procédé selon la revendication 1 ou 2,
**caractérisé en ce**
**que** la surface du substrat de support (1) est réalisée, au regard des cristaux liquides, de manière non orientée.

4. Procédé selon l'une quelconque des revendications 1 à 3,
**caractérisé en ce**
**que** le substrat de support (1) est formé à partir de polyester, de polyoléfine, de PMMA ou de polyamide.

5. Procédé selon l'une quelconque des revendications 1 à 4,
**caractérisé en ce**
**qu'**une orientation nématique ou cholestérique des cristaux liquides est effectuée.

6. Procédé selon l'une quelconque des revendications 1 à 5,
**caractérisé en ce**
**que** l'orientation des cristaux liquides est effectuée uniquement dans des zones de la strate de couche (2a), en particulier au moyen au moins d'un outil, qui est amené en contact avec la strate de couche (2a) afin d'appliquer une contrainte de pression, en particulier au moyen au moins d'un poinçon (50) et/ou au moins d'un cylindre (50').

7. Procédé selon la revendication 6,
**caractérisé en ce**
**que** le poinçon (50) au moins au nombre de un et/ou le cylindre (50') au moins au nombre de un sont réalisés avec un relief de surface (50a) surélevé, et en ce que l'orientation des cristaux liquides est effectuée seulement dans les zones de la strate de couche (2a), dans lesquelles le relief de surface (50a) est amené en contact avec la strate de couche (2a).

8. Procédé selon l'une quelconque des revendications 1 à 7,
**caractérisé en ce**
**que** des zones de la strate de couche (2a), dans lesquelles les cristaux liquides sont orientés, sont réalisées sous la forme de caractères ou de chaînes de caractères alphanumériques, de symboles, de logos, d'images ou de motifs.

9. Utilisation d'un substrat de support (1) en tant que support lors de la formation d'une couche de cristaux liquides (2) polymère réticulée contenant des cristaux liquides à orientation nématique ou cholestérique, qui est réalisé de telle manière qu'une orientation automatique des cristaux liquides d'un matériau à cristaux liquides présent à l'état liquide du fait de la formation d'une solution comprenant un solvant, utilisé afin de former la couche de cristaux liquides (2), ledit matériau à cristaux liquides étant appliqué sur une surface du substrat de support (1), n'est pas effectuée,
**caractérisée en ce**
**que** la surface du substrat de support (1) est formée à partir d'une matière synthétique, qui est choisie de manière adaptée au matériau à cristaux liquides comprenant le solvant de telle manière qu'elle est dissoute dans un solvant par le matériau à cristaux liquides présent dans l'état liquide comprenant le solvant.

10. Utilisation d'un substrat de support (1) en tant que support lors de la formation d'une couche de cristaux liquides (2) polymère, réticulée, contenant des cristaux liquides à orientation nématique ou cholestérique, lequel est réalisé de telle manière qu'une orientation automatique des cristaux liquides d'un matériau à cristaux liquides présent dans un état liquide du fait d'un réchauffage, servant à former la couche de cristaux liquide (2), qui est appliqué sur une surface du substrat de support (1), n'est pas effectuée,
**caractérisée en ce**
**que** la surface du substrat de support (1) est formée à partir d'une matière synthétique, qui est choisie de manière adaptée au matériau à cristaux liquides de telle manière qu'elle est gonflée par le matériau à cristaux liquides présent dans l'état liquide.
